# EUROPÄISCHE PATENTANMELDUNG

(11) **EP 4 353 512 A1**
(43) Veröffentlichungstag der Anmeldung: **17.04.2024**
(21) Anmeldenummer: 23198296.8
(22) Anmeldetag: 19.09.2023
(51) Int. Cl.: B60K 37/10, B60R 7/06, B60R 7/08, B60R 11/02, B62D 25/14, B60R 11/00

(54) **KOMPONENTENANORDNUNG FÜR EIN FAHRZEUG**

(30) Priorität: 11.10.2022 DE 102022210691
(71) Anmelder: VOLKSWAGEN AKTIENGESELLSCHAFT, 38440 Wolfsburg (DE)
(72) Erfinder: Yilmaz, Zafer, 38442 Wolfsburg (DE)

(57) **Zusammenfassung**

Die Komponentenanordnung für ein Fahrzeug umfasst mindestens ein Halteelement (1) zur unmittelbaren oder mittelbaren Verbindung von mindesten zwei Komponenten (2, 25) mit einer tragenden Fahrzeugstruktur (3), wobei das Halteelement (1) eine Ausnehmung (20) aufweist.

Die erste Komponente (2) weist mindestens eine Montagehilfe (14) auf, die in die Ausnehmung (20) eingebracht ist. Die zweite Komponente (25) weist wenigstens einen dem Halteelement (1) zugewandten außenseitigen Fortsatz (32) auf, der in montiertem Zustand (40) in derselben Ausnehmung (20) des Halteelements (1) gelagert ist.

## Beschreibung

Die Erfindung betrifft eine Komponentenanordnung für ein Fahrzeug, die als Komponenten mindestens ein Halteelement, eine erste Komponente und eine zweite Komponente umfasst.

Es sind auch als Aufnahmesysteme oder Fahrzeugcockpits bezeichnete Komponentenanordnungen für Fahrzeuge bekannt, die sich unterschiedlichen Aspekten in der Anordnung oder Montage der Komponenten widmen. Aus dem Kraftfahrzeugbau sind ferner verschiedenste Halteelemente bekannt, die zur Befestigung oder Lagerung von Komponenten an fahrzeugseitigen Strukturen oder Trägern dienen. In einem mit VW380 bezeichneten Fahrzeug (Golf 8) der Anmelderin sind Halteelemente verbaut, die Aufnahmeöffnungen zur Befestigung einer ersten Komponente in Form eines Handschuhfachs und separate Aufnahmen für eine zweite Komponente in Form einer Zentralrechnerhalterung aufweisen.

Aus der DE 10 2019 205 344 A1 ist ein Aufnahmesystem zur Aufnahme wenigstens einer Komponente, insbesondere eines elektrischen Geräts, in einem Instrumententräger eines Fahrzeugs bekannt. Zur optimierten Nutzung des Bauraums hinter einem Handschuhfach weist das Aufnahmesystem eine Führung auf, die bei der Montage eine nicht-lineare Bewegungsbahn für das elektrische Gerät bewirkt. Dadurch ist das Gerät (beispielsweise ein Zentralrechner) bauraumeffizient in einem Instrumententräger positionierbar.

Die DE 10 2014 222 441 A1 beschreibt ein Cockpitmodul für ein Kraftfahrzeug, das ein Steuergerät, einen Kabelstrang zum elektrischen Anschluss des Steuergeräts und ein Handschuhfach umfasst. Um für die Montage erforderliche, später aber überschüssige Längen des Kabelstrangs zu vermeiden, ist der elektrische Anschluss an einer dem Innenraum des Kraftfahrzeugs zugewandten Seite des Steuergeräts angeordnet.

Die DE 10 2006 025 705 A1 betrifft ein Fahrzeugcockpit in Modulbauweise, das eine tragende Grundstruktur und mindestens ein Submodul aufweist. Für eine möglichst einfache und damit kostengünstige Cockpitmontage sind an der Grundstruktur Führungen und an dem Submodul korrespondierende Führungselemente vorgesehen, die eine Führungsbahn definieren, entlang derer das Submodul von einer Ausgangsposition in die festgelegte Endposition bewegbar ist.

Die DE 10 2013 008 761 A1 widmet sich der Vermeidung von Geräuschen, die durch Komponenten im Interieur eines Kraftfahrzeugs erzeugt werden und schlägt eine Instrumententafel vor, die ein integriertes Halterungsteil zur Aufnahme eines Bedienteils oder eines Ablagefachs umfasst. An der Instrumententafel oder an einem Befestigungsträger ist ein Vorsprung vorgesehen, an dem das Halterungsteil im montierten Zustand zur Abstützung rückseitig passgenau zur Anlage gebracht ist, wodurch störende Geräuschentwicklungen in Folge von Vibrationen vermieden werden.

Eine Aufgabe der vorliegenden Erfindung besteht darin, eine Komponentenanordnung für ein Fahrzeug anzugeben, die hinsichtlich des Montageaufwandes vereinfacht und deren Bauteilkosten reduziert sind und die den verfügbaren Bauraum optimal ausnutzt.

Diese Aufgabe wird erfindungsgemäß durch eine Komponentenanordnung für ein Fahrzeug mit den Merkmalen des Patentanspruchs 1 gelöst.

Demgemäß ist bei der Komponentenanordnung mindestens ein Halteelement zur unmittelbaren oder mittelbaren Verbindung von mindesten zwei Komponenten mit einer tragenden Fahrzeugstruktur vorgesehen. Das Halteelement weist eine Ausnehmung auf. Die erste Komponente hat mindestens eine Montagehilfe, die in die Ausnehmung eingebracht ist. Die zweite Komponente hat wenigstens einen dem Halteelement zugewandten außenseitigen Fortsatz, der in montiertem Zustand in derselben Ausnehmung des Halteelements gelagert ist.

Diese Fahrzeugstruktur kann insbesondere ein Fahrzeugquerträger im Frontbereich (in Fahrtrichtung gesehen) hinter dem sichtbaren Cockpitbereich sein. Die zweite Komponente umfasst mindestens einen außenseitigen - also an der tragenden Fahrzeugstruktur und/oder dem Halteelement zugewandten Außenseite angeordneten - Fortsatz. Dieser Fortsatz ist im montierten Zustand zumindest abschnittsweise von der Ausnehmung des Halteelements aufgenommen und gelagert. Die Lagerung erfolgt so, dass Beschleunigungs- und/oder Gewichtskräfte der zweiten Komponente und gegebenenfalls von Gegenständen, die von der Komponente aufgenommen oder von ihr gehalten sind, über die Ausnehmung aufgenommen und an die Fahrzeugstruktur abgeleitet werden. Bevorzugt wird die Montagehilfe der ersten Komponente in die Ausnehmung eingebracht, bevor im weiteren Montageprozess der Fortsatz in die Ausnehmung eingebracht wird.

Ein wesentlicher Vorteil der Erfindung besteht in der Doppelfunktion der Ausnehmung: Sie nimmt nämlich zur Vereinfachung des Fertigungsprozesses einerseits die Montagehilfe auf und erleichtert damit das Montieren. Andererseits dient dieselbe Aufnahme dazu, den Fortsatz kraftaufnehmend zu lagern. Dadurch kann das Halteelement vergleichsweise klein konzipiert werden, was die Möglichkeit eröffnet, dass sich die zweite Komponente weiter bzw. mit vergrößertem Volumen in Richtung Fahrzeugfront erstreckt, weil die Erstreckung der zweiten Komponente in dieser Richtung durch das Halteelement nur geringfügig begrenzt ist. Da also das Halteelement besonders klein und kompakt gestaltet werden kann, zeichnet sich die erfindungsgemäße Komponentenanordnung durch sehr geringen Materialbedarf und damit geringe Bauteilkosten und vermindertes Gewicht aus.

Weitere bevorzugte Ausgestaltungen der Erfindung ergeben sich aus den übrigen, in den Unteransprüchen und in der nachfolgenden Beschreibung genannten sowie in den Figuren der Zeichnung dargestellten Merkmalen, wobei die einzelnen Merkmale grundsätzlich unabhängig voneinander und in beliebiger Kombination realisiert werden können.

Besonders bevorzugt ist eine Ausgestaltung der erfindungsgemäßen Komponentenanordnung, bei der die erste Komponente eine Geräteaufnahme für ein elektrisches Gerät und die zweite Komponente ein Handschuhfach mit einem Handschuhfachkasten ist, der den mindestens einen außenseitigen Fortsatz (nachfolgend auch als Kastenfortsatz bezeichnet) aufweist. Hier wirkt es sich besonders vorteilhaft aus, wenn das oder die Halteelemente sehr klein und kompakt ausgestaltet sein können und somit für das Handschuhfach der Bauraum (in Fahrtrichtung gesehen) hinter den Haltelementen optimal ausgenutzt werden kann. Das Handschuhfach kann dadurch einen besonders großen Aufnahmeraum haben.

Um eine montagetechnisch einfache und insbesondere in einer Unfallsituation (Crashfall) zuverlässige Fixierung der ersten Komponente (Geräteaufnahme) und damit insbesondere eines in der Geräteaufnahme gehalterten Geräts (wie beispielsweise eines Zentralrechners) sicherzustellen, ist nach einer vorteilhaften Ausgestaltung der Erfindung vorgesehen, dass die erste Komponente einen Haltezapfen aufweist, der zur Aufnahme von Gewichtskräften und/oder Beschleunigungskräften in einer Lageröffnung des Halteelements gelagert ist.

Eine besonders einfache und elegante Montage der ersten Komponente ist nach einer bevorzugten Fortbildung der Erfindung dadurch möglich, dass die Montagehilfe als Montagehaken ausgestaltet ist. Die erste Komponente kann so bei der Montage zunächst vorläufig eingehängt, anschließend in ihre Endposition verschwenkt und in dieser z.B. durch den Haltezapfen kraftaufnehmend in der Lageröffnung des Halteelements fixiert werden.

Im Hinblick auf ein erhöhtes zulässiges Gewicht der Komponenten ist nach einer vorteilhaften Weiterbildung der Erfindung vorgesehen, dass mindestens zwei gleich gestaltete Halteelemente vorgesehen sind. Dadurch ist eine sehr günstige und symmetrische Kraftaufnahme realisierbar, wobei die Gleichgestaltung der Halteelemente Kostenvorteile in der Herstellung schafft.

Eine besonders kompakte und montagefreundliche bevorzugte Ausbildung der Erfindung sieht vor, dass die Montagehilfe eine Durchgangsausnehmung aufweist, die im montierten Zustand von dem Fortsatz zumindest teilweise durchdrungen ist.

Zur Dämpfung von Vibrationen und zur Vermeidung von Geräuschen ist nach einer weiteren vorteilhaften Ausgestaltung der Erfindung vorgesehen, dass im montierten Zustand zwischen dem Fortsatz und der Montagehilfe zumindest abschnittsweise wenigstens ein elastisches Element angeordnet ist.

Entsprechende Vorteile ergeben sich nach einer vorteilhaften weiteren Fortbildung der Erfindung, indem der Haltezapfen im montierten Zustand über ein elastisches Element in der Lageröffnung des Halteelements gelagert ist.

Um eine besonders strukturfeste und insbesondere bei einem Heckauffahrunfall sichere Halterung der ersten Komponente bzw. des darin aufgenommenen Geräts sicherzustellen, ist in einer weiteren bevorzugten Ausgestaltung der erfindungsgemäßen Komponentenanordnung vorgesehen, dass der Haltezapfen mit dem Halteelement und/oder mit der tragenden Fahrzeugstruktur verschraubt ist. Dies hat den zusätzlichen Vorteil, dass eine besonders hohe unmittelbare Krafteinleitung in die Fahrzeugstruktur möglich ist, so dass Zwischenbauteile, wie beispielsweise ein Handschuhfachrahmen, entsprechend leichter und damit material- und gewichtssparender ausgelegt werden können.

Die Erfindung wird nachfolgend anhand einer Zeichnung näher erläutert; darin zeigen:
- Figuren 1 bis 3: schematisch verschiedene Montageschritte einer erfindungsgemäßen Komponentenanordnung,
- Figur 4: den Bereich A aus Figur 1 in annähernd entgegengesetzter Perspektive,
- Figur 5: eine Einzelheit einer ersten Komponente,
- Figur 6: einen Querschnitt entlang der Linie IV - IV in Figur 3 und
- Figur 7: einen Schnitt entlang der Linie VII - VII in Figur 6.

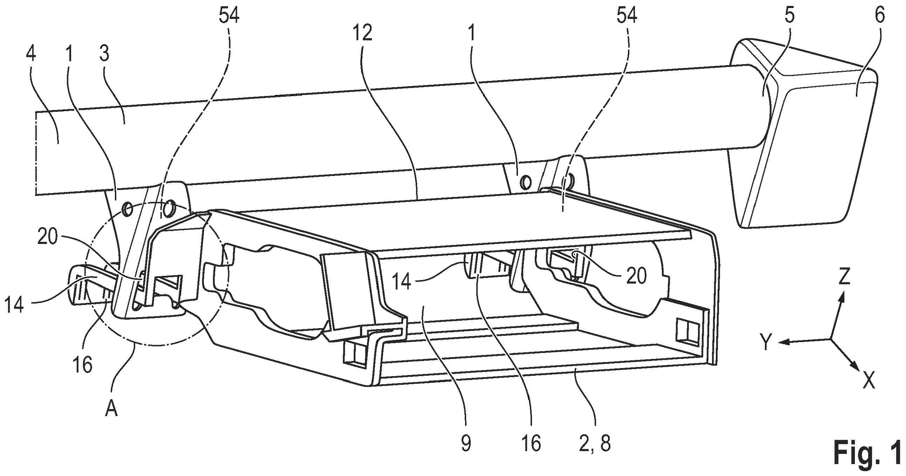

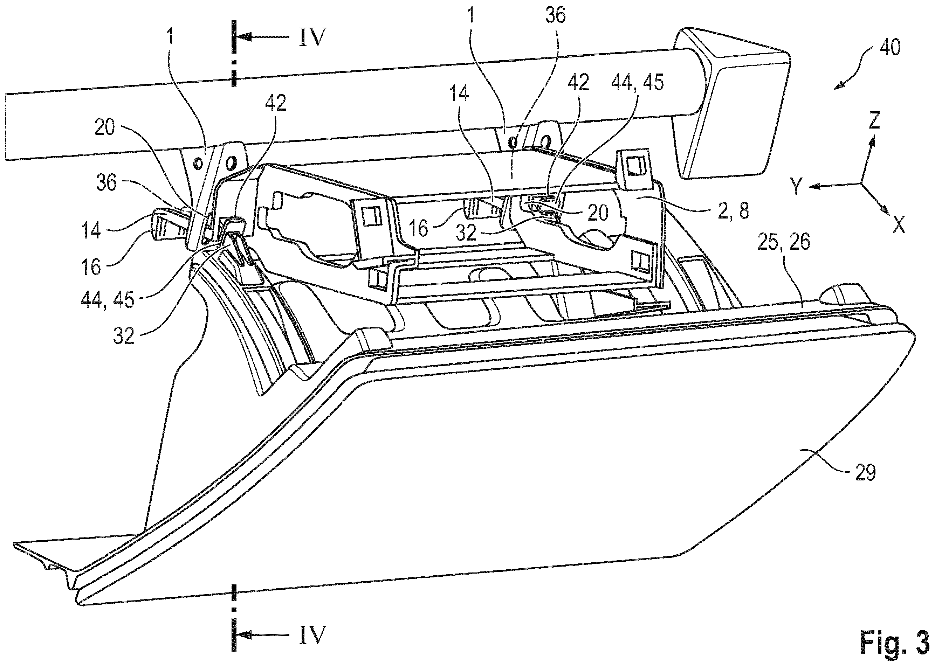

Die Figur 1 zeigt in einem ersten Montageschritt montierte Bauteile der erfindungsgemäßen Komponentenanordnung, nämlich zwei gleiche Halteelemente 1 und eine erste Komponente 2, sowie eine tragende Fahrzeugstruktur 3. Die Fahrzeugstruktur 3 ist als Querträger 4 ausgestaltet, der sich in Fahrzeugquerrichtung Y erstreckt. In Figur 1 ist nur das rechtsseitige Ende 5 des Querträgers 4 dargestellt. Das Ende 5 ist in an sich bekannter Weise über einen Montageflansch 6 mit weiteren tragenden Strukturelementen des Fahrzeugs verbunden. Die erste Komponente 2 ist als Geräteaufnahme 8 für ein elektrisches Gerät, insbesondere einen (nicht dargestellten) Zentralrechner, ausgebildet, der oberhalb eines Handschuhfachs (Figur 3) sicher und unfallresilient in einer dafür vorgesehenen Einschuböffnung 9 aufgenommen und in an sich bekannter und deshalb nicht näher erläuterter Weise mit der Geräteaufnahme 2 mechanisch fest verbunden ist.

Im rückwärtigen Bereich 12, der in Fahrzeuglängsrichtung X betrachtet zur Fahrzeugfront weist, sind zwei Montagehilfen 14 ausgebildet, die einstückig mit der im Spritzguss aus Kunststoff hergestellten Geräteaufnahme 8 ausgebildet sind. Die Montagehilfen 14 weisen am jeweils freien Ende Montagehaken 16 auf und sind durch eine Ausnehmung 20, die in dem jeweiligen Halteelement 1 ausgebildet ist, geschoben (eingebracht). Dadurch hintergreifen die Montagehaken 16 die jeweilige Ausnehmung 20. Mit anderen Worten: Während des Montageprozesses kann die erste Komponente 2 (Geräteaufnahme 8) mit ihren Montagehaken 16 zunächst (vorläufig) in die Ausnehmungen 20 eingehängt werden, um dann um etwa 90° entgegen dem Uhrzeigersinn in die in Figur 1 gezeigte Endposition verschwenkt zu werden.

Die Halteelemente 1 sind in dem gezeigten Ausführungsbeispiel unmittelbar mit dem Querträger 4 verbunden, z.B. verschweißt. Sie erlauben damit eine unmittelbare Ableitung etwaiger Kräfte in die Fahrzeugstruktur 3. Selbstverständlich könnten die Halteelemente 1 aber auch an im Kraftfluss gesehen zwischengeschalteten weiteren Bauteilen befestigt sein. Dann würden die Kräfte mittelbar in die Fahrzeugstruktur 3 eingeleitet werden.

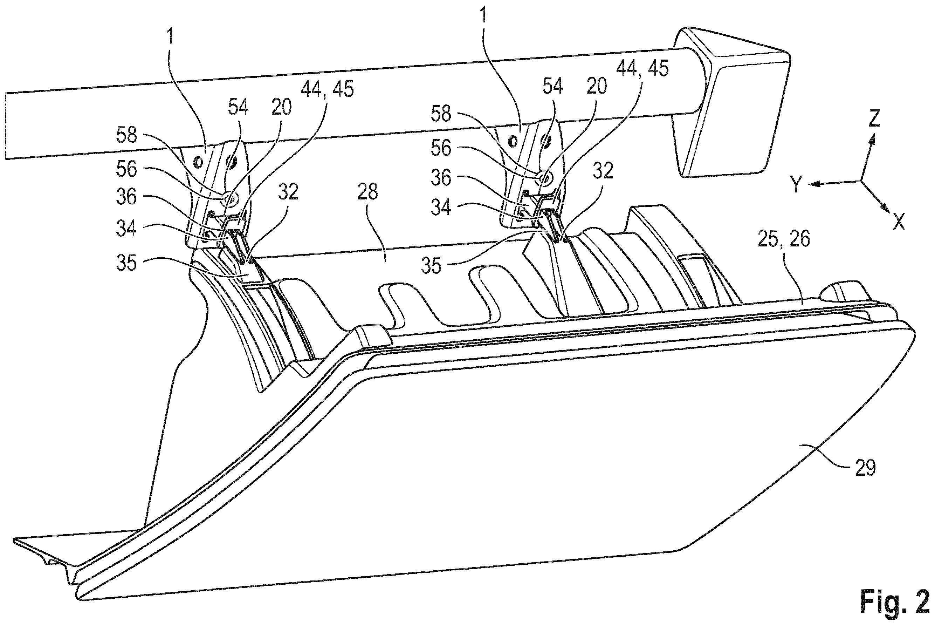

In Figur 2 ist - zur besseren Erkennbarkeit der erfindungsgemäßen Aspekte - die Komponentenanordnung ohne die zuvor beschriebene, tatsächlich bevorzugt aber bereits montierte erste Komponente 2 dargestellt. Die Komponentenanordnung umfasst als weitere (zweite) Komponente 25 ein Handschuhfach 26, das in an sich bekannter und deshalb nur kursorisch beschriebener Weise einen Handschuhfachkasten 28 und eine Handschuhfachklappe 29 aufweist. Die Handschuhfachklappe 29 ist um eine Schwenkachse verschwenkbar, um einen Zugriff in den Handschuhfachkasten 28 bzw. ein Einbringen oder Entnehmen von Gegenständen in diesen bzw. aus diesem zu ermöglichen.

Der Handschuhfachkasten 28 weist zwei außenseitige, in Fahrzeuglängsrichtung X nach vorne orientierte Fortsätze (Kastenfortsätze) 32 auf. Die Kastenfortsätze 32 sind als Rippen 34 ausgestaltet und einstückig aus dem Material des Handschuhfachkastens 28 hergestellt, so dass ihr Rippenfuß 35 direkt in den Handschuhfachkasten übergeht. Die freien Enden 36 der Rippen 34 durchdringen dieselbe Ausnehmung 20 des jeweiligen Halteelements 1 wie die (in Figur 2 nicht dargestellten) Montagehilfen 14 der ersten Komponente 2 (siehe Figuren 1 und 3).

Figur 3 zeigt den montierten Zustand 40 einer Komponentenanordnung mit der Komponente 2 (Geräteaufnahme 8) und der Komponente 25 (Handschuhfach 26), die mit den Halteelementen 1 verbunden bzw. von diesen gelagert und gehalten sind. Im montierten Zustand 40 durchdringen - wie zuvor beschrieben - die Montagehilfen 14 die Ausnehmung 20 in dem jeweiligen Halteelement 1. Die Geräteaufnahme 8 ist beidseitig jeweils am Ansatz der Montagehilfe 14 mit einer Durchgangsausnehmung 42 versehen, durch die jeweils ein Kastenfortsatz 32 mit seinem freien Ende (in Figur 3 nicht sichtbar) durchgeführt ist. Die Durchgangsausnehmung 42 muss dabei keine über den gesamten Umfang materialbegrenzte Ausnehmung sein: Im Rahmen der Erfindung ist darunter auch eine Freimachung zu verstehen, die jedenfalls so dimensioniert ist, dass sie ausreichend Durchtrittsraum für den jeweiligen Kastenfortsatz 32 bietet.

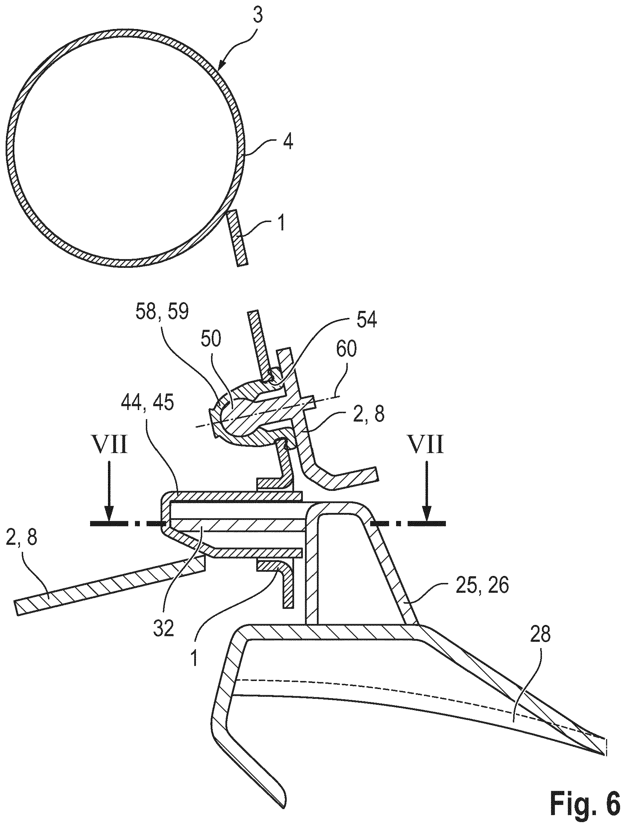

Jeder Kastenfortsatz 32 ist mit seinem freien Ende 36 in ein elastisches Element 44 in Form einer Gummihülse oder eines Gummipuffers 45 (siehe auch Figuren 2 und 6) eingeführt, das seinerseits die Durchgangsausnehmung 42 und die Ausnehmung 20 durchdringt. Damit ist eine feste, dennoch gegen Vibrationen gedämpfte Fixierung des Handschuhfachs 26 sichergestellt. Dies ist auch deshalb von Bedeutung, weil das Kunststoffmaterial des Handschuhfachkastens, insbesondere bei höheren Temperaturen, andernfalls nicht in jedem Fall formtreu bleiben würde, so dass sich zwischen dem oberen Rand der Handschuhfachklappe 29 und einer umgebenden Armaturenblende unerwünschte Spaltveränderungen ergeben könnten.

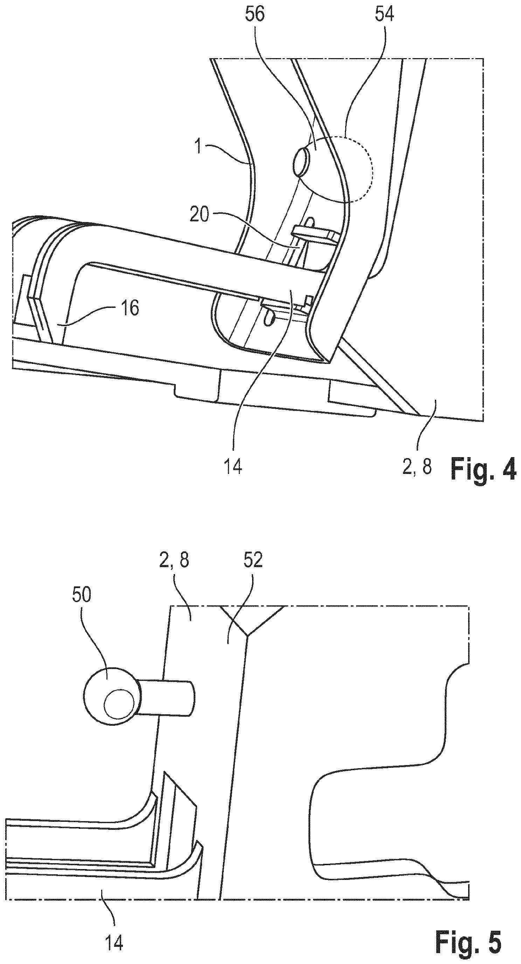

Figur 4 zeigt zur weiteren Erläuterung der Lagerung der ersten Komponente 2 in einer Perspektive, die im Wesentlichen entgegen der Ansicht der Figuren 1 bis 3 gewählt ist, den Durchtritt der Montagehilfe 14 bzw. des Montagehakens 16 durch die Ausnehmung 20 des Halteelements 1.

Figur 5 zeigt einen Haltezapfen 50, der in vertikalem Abstand über der Montagehilfe 14 an einer Stirnfläche 52 der Komponente 2 ausgebildet ist. Tatsächlich sind zwei Haltezapfen 50 vorgesehen (siehe auch Figuren 1 und 4), so dass im montierten Zustand jeweils ein Haltezapfen 50 mit einer entsprechenden Lageröffnung 54 (siehe Figur 6) zusammenwirkt. Die Lageröffnung kann, wie in Figur 4 angedeutet, als Öffnung einer sacklochförmigen Ausstülpung 56 ausgebildet sein.

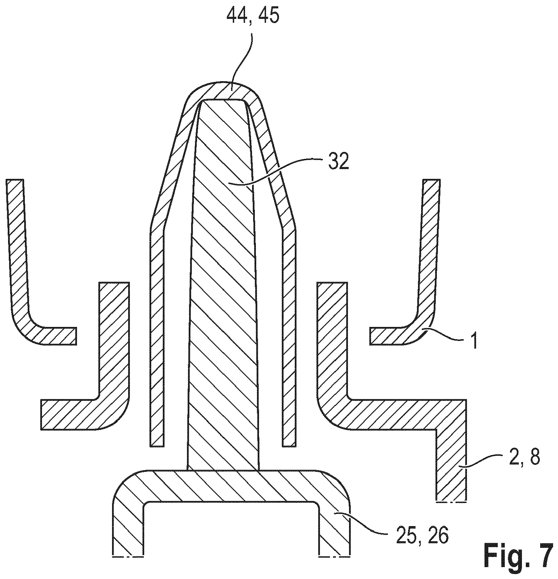

Die zuvor beschriebenen Elemente und insbesondere die Lagerungen sind in den Figuren 6 und 7 weiter verdeutlicht. Der Haltezapfen 50 ist bevorzugt in ein elastisches Element 58 in Form einer Gummihülse oder eines Gummipuffers 59 eingebracht, das als Puffer oder Dämpfungsglied fungiert und in die Lageröffnung 54 des Halteelements 1 eingesetzt ist.

Alternativ und in den Figuren nicht dargestellt kann die erste Komponente 2 mit dem Halteelement 1 verschraubt sein, z.B. indem entlang der in Figur 6 nur angedeuteten Längsachse 60 des Haltezapfens 50 eine Schraube eingebracht ist, die mit dem Material des Halteelements 1 verschraubt ist.

### Bezugszeichenliste

- 1: Halteelement
- 2: erste Komponente
- 3: Fahrzeugstruktur
- 4: Querträger
- 5: Ende
- 6: Montageflansch
- 8: Geräteaufnahme
- 9: Einschuböffnung
- 12: rückwärtiger Bereich
- 14: Montagehilfe
- 16: Montagehaken
- 20: Ausnehmung
- 25: zweite Komponente
- 26: Handschuhfach
- 28: Handschuhfachkasten
- 29: Handschuhfachklappe
- 32: Kastenfortsatz
- 34: Rippe
- 35: Rippenfuß
- 36: freies Ende
- 40: montierter Zustand
- 42: Durchgangsausnehmung
- 44: elastisches Element
- 45: Gummipuffer
- 50: Haltezapfen
- 52: Stirnfläche
- 54: Lageröffnung
- 56: sacklochförmige Ausstülpung
- 58: elastisches Element
- 59: Gummipuffer
- 60: Längsachse

- X: Fahrzeuglängsrichtung
- Y: Fahrzeugquerrichtung

## Patentansprüche

1. Komponentenanordnung für ein Fahrzeug umfassend
- mindestens ein Halteelement (1) zur unmittelbaren oder mittelbaren Verbindung von mindesten zwei Komponenten (2, 25) mit einer tragenden Fahrzeugstruktur (3), wobei das Halteelement (1) eine Ausnehmung (20) aufweist,
- wobei die erste Komponente (2) mindestens eine Montagehilfe (14) aufweist, die in die Ausnehmung (20) eingebracht ist, und
- wobei die zweite Komponente (25) wenigstens einen dem Halteelement (1) zugewandten außenseitigen Fortsatz (32) aufweist, der in montiertem Zustand (40) in derselben Ausnehmung (20) des Halteelements (1) gelagert ist.

2. Komponentenanordnung nach Anspruch 1, wobei
- wobei die erste Komponente (2) eine Geräteaufnahme (2) für ein elektrisches Gerät ist
- und wobei die zweite Komponente (25) ein Handschuhfach (26) mit einem Handschuhfachkasten (28) ist, an dem der mindestens eine Fortsatz (32) angeordnet ist.

3. Komponentenanordnung nach Anspruch 1 oder 2, wobei
- die erste Komponente (2) einen Haltezapfen (50) aufweist, der zur Aufnahme von Gewichtskräften und/oder Beschleunigungskräften in einer Lageröffnung (54) des Halteelements (1) gelagert ist.

4. Komponentenanordnung nach wenigstens einem der vorhergehenden Ansprüche, wobei
- die Montagehilfe (14) als Montagehaken (16) ausgestaltet ist.

5. Komponentenanordnung nach wenigstens einem der vorhergehenden Ansprüche, wobei
- mindestens zwei gleich gestaltete Halteelemente (1) vorgesehen sind.

6. Komponentenanordnung nach wenigstens einem der vorhergehenden Ansprüche, wobei
- die Montagehilfe (14) eine Durchgangsausnehmung (42) aufweist, die im montierten Zustand (40) von dem Fortsatz (32) zumindest teilweise durchdrungen ist.

7. Komponentenanordnung nach wenigstens einem der vorhergehenden Ansprüche, wobei
- im montierten Zustand (40) zwischen dem Fortsatz (32) und der Montagehilfe (14) zumindest abschnittsweise wenigstens ein elastisches Element (58) angeordnet ist.

8. Komponentenanordnung nach wenigstens einem der vorhergehenden Ansprüche, wobei
- der Haltezapfen (50) über ein elastisches Element (58) in der Lageröffnung (54) des Halteelements (1) gelagert ist.

9. Komponentenanordnung nach wenigstens einem der vorhergehenden Ansprüche, wobei
- der Haltezapfen (50) der ersten Komponente (2) mit dem Halteelement (1) und/oder mit der tragenden Fahrzeugstruktur (3) verschraubt ist.
